# EUROPÄISCHE PATENTSCHRIFT

(11) **EP 1 933 969 B1**
(45) Veröffentlichungstag und Bekanntmachung des Hinweises auf die Patenterteilung: **15.07.2009**
(21) Anmeldenummer: 06776446.4
(22) Anmeldetag: 27.07.2006
(51) Int. Cl.: B01D 46/44, B60H 3/06

(54) **FILTERANORDNUNG**
FILTER ARRANGEMENT
ENSEMBLE FILTRE

(30) Priorität: 06.09.2005 DE 102005042406
(43) Veröffentlichungstag der Anmeldung: 25.06.2008
(73) Patentinhaber: Carl Freudenberg KG, 69469 Weinheim (DE)
(72) Erfinder: GÜNTHER, Jürgen, 69198 Schriesheim (DE); STÖSSER, Thomas, 68518 Viernheim (DE); REINHARDT, Heinz, 68535 Edingen (DE); KLATT, Christopher, 69118 Heidelberg (DE)
(86) Internationale Anmeldenummer: PCT/EP2006/007430
(87) Internationale Veröffentlichungsnummer: WO 2007/028461

(56) Entgegenhaltungen:
- EP-A- 1 285 686
- WO-A-20/04085027
- DE-A1- 2 416 805
- DE-A1- 3 517 481
- DE-A1- 10 000 435
- US-A- 4 784 675

## Beschreibung

### Technisches Gebiet

Die Erfindung betrifft eine Filteranordnung, umfassend einen Filter und eine stromabwärts des Filters an dem Filter befestigte Sensoreinrichtung zur Standzeitüberwachung des Filters mit mindestens einem ersten Messfühler zur Erfassung der Strömungsgeschwindigkeit des den Filter durchströmenden Fluids.

### Stand der Technik

Derartige Filteranordnungen sind aus der DE 101 40 510 A1 bekannt. Filteranlagen beispielsweise in Klimaanlagen weisen eine begrenzte Lüfterleistung auf, wodurch der geförderte Volumenstrom in der Klimaanlage durch zunehmende Partikelbeladung des Filters abnimmt. Durch eine stromabwärts des Filters angeordnete Sensoreinrichtung mit einem Messfühler zur Erfassung der Strömungsgeschwindigkeit kann der Verstopfungsgrad des Filters bestimmt und ein erforderlicher Wechsel des Filters signalisiert werden. Eine Filtration von feuchter Luft kann zu Kondensation von Wasser in dem Filter führen. Das in dem Filter eingelagerte kondensierte Wasser führt ebenfalls zu einer Reduzierung des Volumenstroms. Hierbei ist jedoch ein Austauschen des Filters nicht notwendig, da der Filter durch Trocknen regenerierbar ist. Beladungen mit Wasser können allerdings durch eine ausschließliche Geschwindigkeitsmessung nicht erfasst werden.

Aus der DE 100 00 435 A1 ist eine Filteranordnung mit einem Filter und einem integrierten Speicherbaustein bekannt. In dem Speicherbaustein können verschiedene Sensoren zur Messung des Drucks, der Temperatur und der Feuchte integriert sein.

Aus der US 4,784,675 und der WO 2004/085027 A1 sind Filteranordnungen bekannt, bei der Filter und Sensoreinrichtung voneinander beabstandet sind.

### Darstellung der Erfindung

Der Erfindung liegt die Aufgabe zugrunde eine Filteranordnung mit einer verbesserten Standzeitüberwachung bereitzustellen.

Diese Aufgabe wird mit den Merkmalen von Anspruch 1 gelöst. Auf vorteilhafte Ausgestaltungen nehmen die Unteransprüche Bezug.

Zur Lösung der Aufgabe weist die Sensoreinrichtung einen weiteren Messfühler zur Messung der Luftfeuchtigkeit des den Filter durchströmenden Fluids auf. Durch den Messfühler wird die Beladung des durchströmenden Fluids mit Wasser erfasst. Messwerte der Luftfeuchtigkeit in der Nähe der Sättigungsgrenze deuten dabei auf eine Beladung des Filters mit Wasser hin. Beide Messwerte werden in einer Auswerteinheit ausgewertet, wobei durch die Messwerte des Feuchtefühlers eine Fehlerkorrektur der Strömungsgeschwindigkeits-Messwerte erfolgt. Eine weitere Fehlerquelle ist die Empfindlichkeit des Messelementes für die Strömungsgeschwindigkeit gegenüber Feuchtigkeit. Insbesondere Strömungsmessfühler, die aus Messdrähten aus elektrischem Widerstandsmaterial gebildet sind, sind empfindlich gegenüber Luftfeuchtigkeit. Die gemessene Luftgeschwindigkeit ist demnach abhängig von der Luftfeuchtigkeit. Diese Messabweichung wird durch gleichzeitige Messung der Luftfeuchtigkeit in einem weiteren Messfühler kompensiert und die Querempfindlichkeit des Luftgeschwindigkeitsmessers gegenüber Luftfeuchtigkeit wird gesenkt. Die Sensoreinrichtung ist aufgrund der Anordnung auf der Reinluftseite vor Verschmutzung geschützt.

Luftgeschwindigkeitsmessers gegenüber Temperaturänderungen kompensiert werden. In dieser Ausführung werden die beiden für die Steuerung einer Klimaanlage wesentlichen Parameter erfasst. Die durch die erfindungsgemäße Sensoreinrichtung erfassten Messwerte können einer Klimaanlagensteuerung zur Regelung der Klimaanlage zur Verfügung gestellt werden. Dabei ist vorteilhaft, dass die Sensoreinrichtung leicht erreichbar und austauschbar ist und dass die Sensoreinrichtung einfach am Filter befestigbar ist.

Die Sensoreinrichtung kann als vormontierbare Einheit ausgebildet sein. Dabei ergibt sich ein kompaktes und einfach zu montierendes Sensorelement. Der Anschluss der Messfühler an die Auswerteeinheit erfolgt dabei vorteilhafterweise mittels einer einzigen Steckverbindung.

Die Sensoreinrichtung kann als Kunststoffspritzgussteil ausgebildet sein. Kunststoffspritzgussteile sind auch mit einer komplizierten Geometrie kostengünstig herstellbar. Die Messfühler sind dabei sicher in dem Gehäuse aus Kunststoffspritzguss fixiert.

Die Sensoreinrichtung kann beabstandet zu dem Filter angeordnet sein. Der Abstand beträgt dabei vorteilhafterweise 3 bis 10 cm. Durch den Abstand werden Strömungseinflüsse durch den Filter geglättet und es ist bereits eine Durchmischung des Fluidstroms erfolgt, so dass eine bessere Messgenauigkeit erreichbar ist.

Der Filter kann einen Rahmen aus Kunststoffspritzguss aufweisen. An dem Kunststoff-Rahmen kann die Sensoreinrichtung besonders einfach befestigt werden.

Die Sensoreinrichtung kann kraft- und/oder formschlüssig an dem Filter befestigt sein. Dabei ergibt sich eine lösbare Verbindung, so dass Filter und Sensoreinrichtung unabhängig voneinander austauschbar sind. Die Verbindung kann beispielsweise über eine Schnappverbindung erfolgen. Der notwendige Abstand von Sensoreinrichtung und Filter kann durch einen Steg hergestellt sein.

Die Sensoreinrichtung kann stoffschlüssig mit dem Filter verbunden ist. Dabei ist die Sensoreinrichtung verliersicher an dem Filter befestigt und die Herstellung der Einheit aus Sensorelement und Filter ist kostengünstig. Der notwendige Abstand von Sensoreinrichtung und Filter kann durch einen materialeinheitlich ausgeführten Steg hergestellt sein.

Die Filteranordnung findet erfindungsgemäß als Innenraumfilter eines Kraftfahrzeugs ihre Verwendung. Die Filteranordnung weist durch Integration der Sensoreinrichtung in ein Filter einen besonders kompakten Aufbau auf und ist besonders einfach zu montieren und auszutauschen. Durch die verbesserte Standzeitüberwachung werden unnötige Wartungsarbeiten vermieden. Des Weiteren können die Messwerte zur Optimierung und Filterauslegung verwendet werden, um beispielsweise bei Weiterentwicklungen Bauraum einzusparen.

Eine weitere erfindungsgemäße Verwendung ist die Anordnung der Filteranordnung in einem Zuluftstrom einer Brennstoffzelle. Besonders vorteilhaft ist die Anordnung in einer PEM-Brennstoffzelle, da diese zum Erreichen eines größtmöglichen Wirkungsgrades einen befeuchteten Zuluftstrom benötigt. Die Befeuchtung erfolgt dabei häufig mittels eines Befeuchters, beispielsweise eines Membranbefeuchters. Bei einer Anordnung der erfindungsgemäßen Filteranordnung vor einem Befeuchter, können die durch die Sensoreinrichtung erfassten Daten, insbesondere die gemessene Feuchtigkeit des Zuluftstroms, zur Regelung des Befeuchters verwendet werden. Die Sensoreinrichtung ist dabei besonders kompakt und leicht erreichbar in der Filteranordnung angeordnet.

Eine weitere vorteilhafte Verwendung ist der Einsatz der erfindungsgemäßen Filteranordnung in einer mobilen Einrichtung, insbesondere einem Raumluftreiniger. Durch die Integration einer Sensorik in eine Filteranordnung ergibt sich eine besonders kompakte Bauform, welche bei mobilen Einrichtungen erforderlich ist.

Des Weiteren kann die erfindungsgemäße Filteranordnung vorteilhaft in Filteranlagen/Filterdecken von Lackierdecken integriert werden. Für qualitativ hochwertige Lackierarbeiten ist eine Zufuhr partikelarmer Luft erforderlich. Die erfindungsgemäße Filteranordnung ermöglicht eine kontinuierliche Überprüfung der Luftgüte.

### Kurzbeschreibung der Zeichnung

Einige Ausführungen der erfindungsgemäßen Filteranordnung werden nachfolgend anhand der Figuren näher erläutert. Diese zeigen, jeweils schematisch:
- Fig. 1: eine Filteranordnung mit einer stoffschlüssig befestigten Sensoreinrichtung;
- Fig. 2: eine Filteranordnung mit einer formschlüssig befestigten Sensoreinrichtung.

### Ausführung der Erfindung

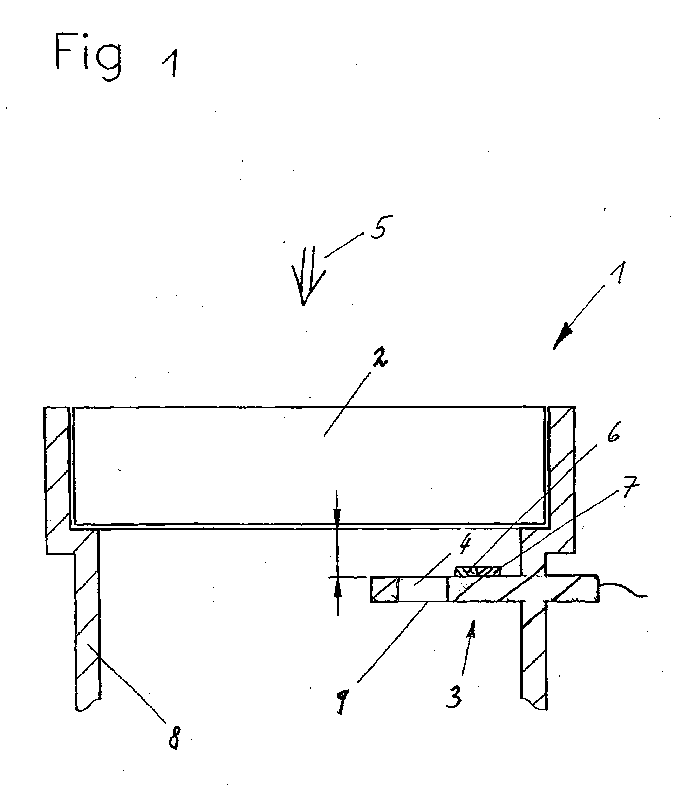

Figur 1 zeigt eine Filteranordnung 1, die als Innenraumfilter in einem Kraftfahrzeug oder als Filter eines Zuluftstroms einer PEM-Brennstoffzelle ihre Verwendung findet. Die Filteranordnung besteht aus einem Filter 2 und eine stromabwärts des Filters 2, also auf der Reinluftseite, angeordnete Sensoreinrichtung 3. Die Sensoreinrichtung dient einerseits zur Standzeitüberwachung des Filters 2 und versorgt andererseits die Bordelektronik, beispielsweise die Steueranlage der Kraftfahrzeug-Klimaanlage, mit den erfassten Messwerten. Die Sensoreinrichtung 3 weist einen ersten Messfühler 4 auf, der durch Messdrähte aus elektrischem Widerstandsmaterial 9 gebildet ist und der der Erfassung der Strömungsgeschwindigkeit des den Filter 2 durchströmenden Fluids 5 dient. Des Weiteren weist die Sensoreinrichtung 3 einen weiteren Messfühler 6 auf, der zur Messung der Luftfeuchtigkeit des den Filter 2 durchströmenden Fluids 5 ausgerüstet ist. Ein zusätzlichen Messfühler 7 der zur Messung der Temperatur des den Filter 2 durchströmenden Fluids 5 ausgerüstet ist, ist ebenfalls in der Sensoreinrichtung 3 angeordnet. Der Filter 2 weist einen Rahmen 8 auf, der als Kunststoffspritzgussteil ausgebildet ist. Mit den Rahmen 8 ist einstückig und materialeinheitlich die Sensoreinrichtung 3 ausgebildet, wobei die Messfühler 4, 6, 7 in den Spritzguss der Sensoreinrichtung 3 fest eingebettet sind. Das Sensorelement 3 ist beabstandet zu dem Filter 2 an dem Rahmen 8 befestigt. Weiterhin ist die Sensoreinrichtung 3 länglich ausgebildet, so dass die Messfühler 4, 6, 7 in die freie Strömung hineinragen und keine Verfälschung der Messergebnisse durch Randeinflüsse erfolgt.

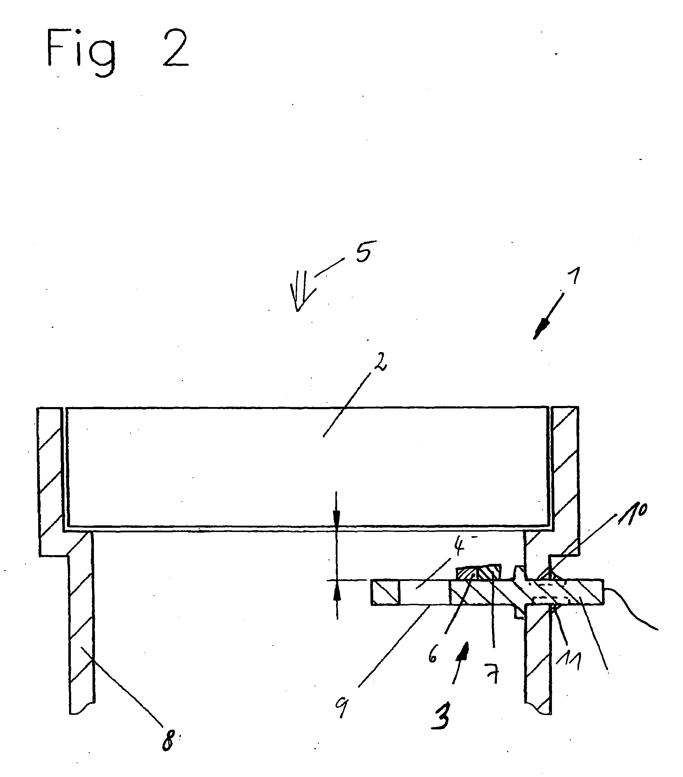

Figur 2 zeigt eine Filteranordnung 1 gemäß Figur 1, wobei die Sensoreinrichtung 3 als separates Element ausgeführt ist und eine vormontierbare Einheit bildet. In dieser Ausführung ist die Sensoreinrichtung 3 ebenfalls als Kunststoffspritzgussteil ausgebildet. Der Rahmen 8 weist eine Ausnehmung 10 auf, in die die Sensoreinrichtung 3 eingesteckt ist, wobei die Sensoreinrichtung 3 durch Schnappverschlusselemente 11 formschlüssig an dem Filter 2 fixiert ist. In anderen Ausgestaltungen kann die Sensoreinrichtung 3 auch kraftschlüssig beispielsweise mittels einer Schraubverbindung an dem Filter 2 befestigt sein.

## Patentansprüche

1. Filteranordnung (1), umfassend einen Filter (2) und eine stromabwärts des Filters (2) an dem Filter (2) befestigte Sensoreinrichtung (3) zur Standzeitüberwachung des Filters (2) mit mindestens einem ersten Messfühler (4) zur Erfassung der Strömungsgeschwindigkeit des den Filter (2) durchströmenden Fluids (5), **dadurch gekennzeichnet, dass** die Sensoreinrichtung (3) einen weiteren Messfühler (6) zur Messung der Luftfeuchtigkeit des den Filter (2) durchströmenden Fluids (5) aufweist.

2. Filteranordnung nach Anspruch 1, **dadurch gekennzeichnet, dass** die Sensoreinrichtung (3) einen zusätzlichen Messfühler (7) zur Messung der Temperatur des den Filter (2) durchströmenden Fluids (5) aufweist.

3. Filteranordnung nach Anspruch 1 oder 2, **dadurch gekennzeichnet, dass** die Sensoreinrichtung (3) als vormontierbare Einheit ausgebildet ist.

4. Filteranordnung nach einem der Ansprüche 1 bis 3, **dadurch gekennzeichnet, dass** die Sensoreinrichtung (3) als Kunststoffspritzgussteil ausgebildet ist.

5. Filteranordnung nach einem der Ansprüche 1 bis 4, **dadurch gekennzeichnet, dass** die Sensoreinrichtung (3) beabstandet zu dem Filter (2) angeordnet ist.

6. Filteranordnung nach einem der Ansprüche 1 bis 5, **dadurch gekennzeichnet, dass** der Filter (2) einen Rahmen (8) aus Kunststoffspritzguss aufweist.

7. Filteranordnung nach einem der Ansprüche 1 bis 6, **dadurch gekennzeichnet, dass** die Sensoreinrichtung (3) kraft- und/oder formschlüssig an dem Filter (2) befestigt ist.

8. Filteranordnung nach einem der Ansprüche 1 bis 6, **dadurch gekennzeichnet, dass** die Sensoreinrichtung (3) stoffschlüssig mit dem Filter (2) verbunden ist.

9. Verwendung der Filteranordnung (1) als Innenraumfilter eines Kraftfahrzeugs.

10. Verwendung der Filteranordnung (1) in einem Zuluftstrom einer Brennstoffzelle.

## Claims

1. Filter arrangement (1) comprising a filter (2) and a sensor device (3) which is fastened to the filter (2) downstream of the filter (2), is intended for monitoring the service life of the filter (2) and has at least one first sensing element (4) for detecting the flow rate of the fluid (5) flowing through the filter (2), **characterized in that** the sensor device (3) has a further sensing element (6) for determining the air humidity of the fluid (5) flowing through the filter (2).

2. Filter arrangement according to Claim 1, **characterized in that** the sensor device (3) has an additional sensing element (7) for determining the temperature of the fluid (5) flowing through the filter (2).

3. Filter arrangement according to Claim 1 or 2, **characterized in that** the sensor device (3) is designed as a unit which can be preassembled.

4. Filter arrangement according to one of Claims 1 to 3, **characterized in that** the sensor device (3) is designed as an injection-moulded plastic part.

5. Filter arrangement according to one of Claims 1 to 4, **characterized in that** the sensor device (3) is arranged spaced apart from the filter (2).

6. Filter arrangement according to one of Claims 1 to 5, **characterized in that** the filter (2) has a frame (8) composed of injection-moulded plastic.

7. Filter arrangement according to one of Claims 1 to 6, **characterized in that** the sensor device (3) is fastened to the filter (2) in a frictional and/or form-fitting manner.

8. Filter arrangement according to one of Claims 1 to 6, **characterized in that** the sensor device (3) is connected to the filter (2) with a cohesive material joint.

9. Use of the filter arrangement (1) as an interior filter of a motor vehicle.

10. Use of the filter arrangement (1) in an air inlet flow of a fuel cell.

## Revendications

1. Ensemble de filtre (1) comprenant un filtre (2) et un dispositif de capteur (3) fixé sur le filtre (2) en aval du filtre (2), pour contrôler le temps d'utilisation du filtre (2), comprenant au moins un premier palpeur de mesure (4) pour détecter la vitesse d'écoulement du fluide (5) traversant le filtre (2), **caractérisé en ce que** le dispositif de capteur (3) présente un palpeur de mesure supplémentaire (6) pour mesurer l'humidité atmosphérique du fluide (5) traversant le filtre (2).

2. Ensemble de filtre selon la revendication 1, **caractérisé en ce que** le dispositif de capteur (3) présente un palpeur de mesure supplémentaire (7) pour mesurer la température du fluide (5) traversant le filtre (2).

3. Ensemble de filtre selon la revendication 1 ou 2, **caractérisé en ce que** le dispositif de capteur (3) est réalisé sous forme d'unité prémontable.

4. Ensemble de filtre selon l'une quelconque des revendications 1 à 3, **caractérisé en ce que** le dispositif de capteur (3) est réalisé sous forme de pièce moulée par injection de plastique.

5. Ensemble de filtre selon l'une quelconque des revendications 1 à 4, **caractérisé en ce que** le dispositif de capteur (3) est disposé à distance du filtre (2).

6. Ensemble de filtre selon l'une quelconque des revendications 1 à 5, **caractérisé en ce que** le filtre (2) présente un cadre (8) en plastique moulé par injection.

7. Ensemble de filtre selon l'une quelconque des revendications 1 à 6, **caractérisé en ce que** le dispositif de capteur (3) est fixé par engagement par force et/ou par correspondance géométrique au filtre (2).

8. Ensemble de filtre selon l'une quelconque des revendications 1 à 6, **caractérisé en ce que** le dispositif de capteur (3) est connecté au filtre (2) par liaison de matière.

9. Utilisation de l'ensemble de filtre (1) sous forme de filtre pour l'habitacle d'un véhicule automobile.

10. Utilisation de l'ensemble de filtre (1) dans un courant d'air d'afflux d'une pile à combustible.
